# FASCICULE DE BREVET EUROPEEN

(11) **EP 0 347 266 B1**
(45) Date de publication et mention de la délivrance du brevet: **15.09.1993**
(21) Numéro de dépôt: 89401214.5
(22) Date de dépôt: 28.04.1989
(51) Int. Cl.: A01G 13/10

(54) **Dispositif de protection de végétaux contre les animaux prédateurs**
Schutzvorrichtung für Pflanzen gegen Raubtiere
Device for protecting plants against predators

(30) Priorité: 28.04.1988 FR 8805695
(43) Date de publication de la demande: 20.12.1989
(73) Titulaire: Hureau, Jean Claude M., F-78310 Maurepas (FR); Hureau, Jacques, F-72600 Saint-Remy-Des-Monts (FR)
(72) Inventeur: Hureau, Jean Claude M., F-78310 Maurepas (FR); Hureau, Jacques, F-72600 Saint-Remy-Des-Monts (FR)
(74) Mandataire: Wagret, Jean-Michel

(56) Documents cités:
- EP-A- 0 142 658
- DE-A- 3 213 006
- FR-A- 2 458 218
- US-A- 3 816 959

## Description

La présente invention concerne une structure de défense et de protection permettant d'isoler des cultures végétales notamment arboricoles afin d'assurer leur protection physique à l'encontre des agressions provenant d'animaux prédateurs.

On sait que les cultures, notamment les jeunes plants, mis en place pour assurer le reboisement, et d'une façon générale les plantations végétales, qui sont nécessairement abandonnées au milieu de la nature, risquent, dans les premières années de leur développement, des agressions de la part d'animaux, qu'il s'agisse d'animaux sauvages (lapin, chevreuil, sanglier), ou d'animaux en pacage ayant échappé à la surveillance humaine.

Le problème de la protection des jeunes plants ou jeunes pousses se pose également pour des plantations de vignes ou pour des cultures agricoles ou horticoles.

Dans tous ces cas il est souhaitable d'assurer notamment par la mise en place d'un grillage de protection, un isolement physique des cultures de façon à empêcher l'agression d'animaux cherchant à consommer les jeunes pousses, feuilles, plants ou écorces des troncs...

On connaît à cet effet des grilles de protection en métal ou en matière synthétique qui entourent soit la surface plantée, soit isolément chaque plant ou tronc.

On utilise notamment à cette fin un grillage en matière synthétique extrudée à mailles en losanges et de préférence, étant donné sa meilleure tenue et sa rigidité améliorée, à mailles carrées.

L'invention concerne des perfectionnements aux structures de protection de ce type notamment aux grillages en matière synthétique et permet de développer considérablement l'efficacité de cette protection.

On sait, en effet, que à moins d'utiliser des grillages comportant des brins de grande dimension, ce qui accroît le prix de revient du produit, le grillage résiste mal, à la longue, à l'action destructrice des rongeurs.

La présente invention vise à remédier à cet inconvénient et permet de développer considérablement l'efficacité des grillages de protection pour végétaux.

Et à cet effet l'invention concerne une structure sous forme de feuille souple, notamment lacunaire, en matière synthétique, et apte à former une paroi de défense et de protection pour les végétaux contre les animaux prédateurs, et cette structure est caractérisée en ce que la matière synthétique, dont est constituée ladite structure, comporte, incorporée dans sa masse, un agent actif à action répulsive à l'encontre des animaux.

Notamment l'invention concerne une telle structure caractérisée en ce qu'elle est constituée d'un grillage en matière plastique extrudée et ayant reçu, incorporée dans la masse de la matière plastique, lors de l'extrusion, un agent actif à action répulsive contre les animaux.

Plus spécialement l'invention concerne une structure telle qu'un grillage, en matière plastique extrudée, se présentant sous forme tubulaire et apte à entourer le plant ou la plante à protéger.

Selon l'invention, on utilise de préférence à titre d'agent actif un produit ayant une action irritante sur les muqueuses.

Et selon une forme de réalisation, l'agent actif est constitué par du diméthyle dithiocarbamate de zinc (zdmc).

Notamment, le diméthyle dithiocarbamate de zinc est introduit dans une proportion pondérale comprise entre 0,5 et 5% de la matière plastique, et de préférence cette proportion est voisine de 1%.

Notamment, selon une autre forme de réalisation on peut prévoir que l'agent actif incorporé dans la masse de la matière plastique est choisi pour jouer à la fois le rôle de plastifiant et en même temps exerce une action irritante au contact des muqueuses.

On choisit notamment cet agent actif à action irritante parmi les produits n'ayant pas d'action toxique ou d'irritation sur les tissus du corps humain.

Selon une variante, l'agent actif est choisi, pour son action olfactive, et il est choisi parmi les produits à exsudation lente dans le temps, les vapeurs ainsi exsudées ayant une action répulsive sur les animaux ciblés.

Selon une autre particularité, le grillage en matière plastique contient des agents anti-ultraviolets permettant d'améliorer la durée de vie du produit.

D'autres caractéristiques et avantages de l'invention ressortiront de la description qui suit et qui est donnée en rapport avec une forme de réalisation présentée à titre d'exemple non limitatif.

On connaît ainsi des grilles extrudées à partir de matières plastiques telles que le chlorure de polyvinyle, le polystyrène, le polyéthylène, ces produits comportant des agents plastifiants et adjuvants de fabrication dans les proportions connues.

On connaît notamment des grillages à mailles carrées obtenues par des procédés d'extrusion en continu ; selon ces procédés connus, une tête de filière annulaire, comportant des organes, tels que des dents, aptes à interrompre par intermittence la nappe de matière synthétique extrudée, débite un ensemble lacunaire formé de fils longitudinaux croisés avec des anneaux transversaux en définissant ainsi une structure tubulaire en forme de grillage, lequel peut être amené à une dimension convenable par étirage sur une forme, permettant d'obtenir un renforcement de la structure par l'orientation moléculaire ainsi produite au sein des fils et anneaux.

Cette extrudeuse est alimentée par une boudineuse laquelle assure le ramollissement de la matière synthétique, introduite sous forme de granules, par effet thermique, ainsi que sa mise sous pression au moyen d'une vis d'Archimède.

Et selon l'invention, on introduit, dans l'alimentation de la boudineuse, un produit actif à action répulsive.

Ce produit peut être introduit sous toute forme appropriée solide ou liquide ; pour permettre un dosage plus sûr, il est préférable d'introduire le produit sous forme de granules ou de poudre ; l'ensemble est intimement lié soit préalablement, soit au sein de la boudineuse de sorte que le produit actif se trouve ainsi diffusé et réparti régulièrement au sein de la structure de la matière synthétique qui va conformer le grillage.

A titre d'exemple, on fabrique à partir d'une filière circulaire, produisant un grillage à mailles carrées, une structure tubulaire lacunaire à base de polyéthylène comportant dans sa masse un pourcentage de 1% de diméthyle dithiocarbamate.

Ce produit a été choisi et sélectionné comme ne comportant aucun risque de toxicité à l'égard de l'homme ou d'agression sur les tissus du corps humain.

Il provoque cependant, lorsque le grillage est attaqué par un rongeur, une légère irritation des tissus qui n'entraîne aucune affection et aucun trouble pathogène pour l'animal, cependant le goût du produit ressenti comme une légère irritation par les muqueuses buccales de l'animal, détourne ce dernier de la poursuite de l'opération.

On voit que l'on peut donc réaliser l'action répulsive en agissant sur les divers sens de l'animal.

On peut ainsi utiliser un produit à action olfactive, l'animal, dont l'odorat est, comme chacun sait, considérablement plus développé que celui de l'homme, est sensible aux émanations de vapeurs qui peuvent être exsudées par un produit actif introduit dans la masse de la matière plastique dont est conformé le grillage.

Le produit actif peut également être choisi pour son action gustative ; il comporte alors des propriétés organo-leptiques répulsives pour l'animal lorsque ce dernier tente de ronger les brins de la matière plastique pour se frayer un chemin jusqu'à la plante protégée. L'animal est alors détourné de la poursuite de l'opération par, non seulement l'odeur, mais aussi le goût introduit dans sa bouche par cette action.

Enfin, le produit peut également intervenir sous une forme légèrement agressive en provoquant une légère irritation qui ne perturbe pas les divers sens du gibier et n'entraîne donc pas d'effet secondaire au niveau du maintien de la faune sauvage. Cette action irritante est, cependant, suffisante pour produire un effet dissuasif sur l'animal.

Le grillage selon l'invention sera avantageusement présenté sous forme de sections de bandes aptes à permettre la mise en place d'une clôture entourant l'espace de culture a protéger.

## Revendications

1. Clôture en matière synthétique, apte à êntre mise en place autour d'un espace de culture et propre à s'opposer au passage d'animaux prédateurs et du type constitué d'un grillage en matière plastique extrudée conformé sous forme tubulaire en entourant le plant ou la plante à protéger, caractérisé en ce que la masse de la matière plastique comporte un agent à action répulsive contre lesdits animaux prédateurs, ledit agent ayant cumulativement une action irritante sur les muqueuses, et des propriétés organoleptiques répulsives.

2. Structure selon la revendication 1 et la revendication 2, caractérisée en ce que l'agent actif est constitué par du diméthyle ithiocarbamate de zinc (zdmc) dans une proportion pondérale comprise entre 0,5 et 5% et de préférence voisine de 1% de la matière plastique.

## Claims

1. Fencing made of synthetic material, adapted to be placed around a space for crops and to oppose the passage of predatory animals and of the type constituted by a netting of extruded plastics material shaped in tubular form, surrounding the plant to be protected, characterized in that the mass of the plastics material comprises an agent with repulsive action against said predatory animals, said agent having, cumulatively, an irritating action on the mucous membranes and repulsive organoleptic properties.

2. Structure according to Claim 1 and Claim 2, characterized in that the active agent is constituted by zinc dimethyl ithiocarbamate (zdmc) in a proportion by weight included between 0.5 and 5% and preferably close to 1% of the plastics material.

## Patentansprüche

1. Zaun aus synthetischem Material, der zur Verhinderung des Durchgangs von schädlichen Tieren um eine Kulturfläche herum aufstellbar ist, der aus einem Gitter aus extrudierten Kunststoff besteht, und röhrenförmig, die zu schützende Pflanze oder Anpflanzung umgebend, ausgebildet ist,
**dadurch gekennzeichnet,**
dass die Kunststoffmasse ein Mittel mit abstossender Wirkung gegen die für Kulturen schädlichen Tiere umfasst, wobei das Mittel kumulativ eine irritierende Wirkung auf die Schleimhäute und abstossende organoleptische Eigenschaften aufweist.

2. Struktur nach Anspruch 1,
**dadurch gekennzeichnet,**
dass das aktive Mittel durch Zinkdimethylithiocarbamat (zdmc) in einem Gewichtsanteil von 0,5 bis 5 % und vorzugsweise um etwa 1 % des Kunststoffs besteht.
